# EUROPEAN PATENT SPECIFICATION

(11) **EP 4 012 211 B1**
(45) Date of publication and mention of the grant of the patent: **18.10.2023**
(21) Application number: 20213791.5
(22) Date of filing: 14.12.2020
(51) Int. Cl.: F16C 37/00, F16C 33/66, F16C 35/04, F04D 29/046, F04D 29/06, F04D 29/58, F04D 1/06, F04D 29/047

(54) **A BEARING HOUSING FOR A FLOW MACHINE AND A FLOW MACHINE WITH A BEARING HOUSING**
LAGERGEHÄUSE FÜR EINE STRÖMUNGSMASCHINE UND STRÖMUNGSMASCHINE MIT EINEM LAGERGEHÄUSE
LOGEMENT DE PALIER POUR UNE MACHINE D'ÉCOULEMENT ET MACHINE D'ÉCOULEMENT DOTÉE D'UN LOGEMENT DE PALIER

(43) Date of publication of application: 15.06.2022
(73) Proprietor: Sulzer Management AG, 8401 Winterthur (CH)
(72) Inventor: Grant, Sean, Uddingston G71 7HQ (GB)
(74) Representative: IPS Irsch AG

(56) References cited:
- EP-A1- 3 730 796
- EP-A2- 0 235 505
- WO-A1-2019/002358
- CN-U- 205 071 563
- DE-C- 961 584
- FR-A1- 2 546 605
- US-A- 2 352 206

## Description

The invention relates to a bearing housing for a flow machine according to the preamble of the independent claim 1. The invention further relates to a flow machine with a bearing housing according to the independent claim 11.

Flow machines for conveying a fluid, for example centrifugal pumps, compressors, fans, expanders or turbines typically comprise a stationary machine housing that encloses a rotor, e.g. an impeller, which is arranged on a shaft rotating around an axis of the flow machine. The flow machine also has at least one bearing unit with a radial and / or axial (thrust) bearing to support the shaft and the rotor. Typically, the bearing unit has a separate bearing housing that is firmly connected to the housing of the flow machine. In this case, the bearing housing comprises a bearing axis, a bearing chamber for receiving the bearing and a lubricant chamber for receiving a lubricant. The lubricant chamber and the bearing chamber are in fluid communication via an opening, so that the bearing can be cooled and lubricated by means of the lubricant during operation of the flow machine. Furthermore, the lubricant chamber has a wall portion for dissipating heat to the environment, wherein the wall portion has both an inner surface directed towards the lubricant chamber and an outer surface directed towards the environment.

In order to dissipate the frictional heat generated in the bearing during operation of the flow machine, cooling fins are not required but are typically included to increase the surface area of the housing and therefore the overall cooling capacity. These cooling fins are part of the housing and not a separate item. In another way, cooling can also be achieved by water or by increasing the size of the lubricant chamber and/or by increasing the amount of lubricant. The current methods cool the housing itself and the lubricant is only cooled indirectly through being in contact with the housing. This is very inefficient and limits the maximum heat dissipation across the bearings.

A lubricating system for a shaft bearing of a boiler feed pump with a cooling unit provided with a wall having fins is known from FR 2 546 605 A1. An oil-cooled shaft bearing with a thin-walled oil tank being divided into several flat pockets is known from DE 961 584 C.

However, it has been shown in practice, that under certain operating conditions, for example high outside air temperatures, the cooling techniques mentioned are insufficient and expensive, resulting in an increased wear or even bearing failure or high bearing housing costs.

Accordingly, it is an object of the invention to improve a bearing housing in such a way that sufficient cooling of the bearing and the lubricant can be achieved even at high ambient temperatures and high product temperatures, and thus the ambient temperature range for the operation of the flow machine can be extended, the operating range can be increased (e.g. running speed) and in particular to enlarge the maximum heat dissipation across the bearing.

The objects of the invention meeting this problem are characterized by the features of the independent claim 1 and of independent claim 11.

The dependent claims relate to particularly advantageous embodiments of the invention.

Thus, the invention relates to a bearing housing for a flow machine, wherein the bearing housing comprises a bearing chamber for receiving a bearing and a lubricant chamber arranged at the bearing chamber for receiving a lubricant. The bearing chamber is in fluid communication with the lubricant chamber via an opening such that the lubricant can flow between the bearing chamber and the lubricant chamber. Furthermore, the bearing housing comprises a wall portion with a cooling fin for dissipating a heat of the lubricant to an environment.

According to the invention, the cooling fin comprises a conduit for the lubricant through which conduit the lubricant chamber and the bearing chamber are in fluid communication such that the lubricant can be conducted from the lubricant chamber into the bearing chamber through the conduit to dissipate heat to the environment.

Therefore, the bearing housing according to the invention has a cooling fin, which cooling fin increases the total surface area of the bearing housing, which increases the heat exchange with the environment as the heat of the lubricant can be more effectively transferred to the environment through the lubricant flowing through the cooling fin, since the heat exchange between the lubricant and the wall portion for the dissipation of heat to the environment is increased.

This makes it possible to achieve sufficient cooling of the bearing and the lubricant even at high ambient temperatures and thus to expand the ambient temperature range for the operation of the flow machine. This ensures sufficient lubrication and cooling even at outside air temperatures above 50°C, which can increase the service life of the bearing.

Therefore, in the operating state, the lubricant flows through the conduit in the cooling fin and is thereby directly cooled by the cooling fin and not only indirectly through being in contact with the bearing housing of the lubricant chamber. This is very efficient and enlarges the maximum heat dissipation across the bearing housing.

In order to increase the heat dissipation, the conduit is preferably arranged meandering in the cooling fin such that a majority of a volume of the cooling fin is filled through the conduit. The more windings the conduit comprises and the more volume the conduit takes up in the cooling fin, the more effectively the heat can be released into the environment. In particular the majority of the volume of the cooling fin is 50 to 90 %, especially 60 to 80 % of the volume of the cooling fin.

In a preferred embodiment, the cooling fin is arranged on an outer surface of the wall portion (external cooling fin), which outer surface is directed towards the environment.

Alternatively, the lubricant chamber is filled with the lubricant up to a lubricant level in the operating state and the cooling fin is designed as internal cooling fin extending inside the lubricant chamber preferably completely below the lubricant level.

In practice the bearing housing can comprise external and internal cooling fins. This increases the overall surface area available for heat exchange between the bearing housing and the environment.

Furthermore, the cooling fin can comprise a cooling conduit through which cooling conduit a cooling fluid is flowable to additionally cool the lubricant which is flowable through the conduit.

The lubricant can be guided from the lubricant chamber through the conduit in the cooling fins to the bearing housing (and through the opening back to the lubricant chamber or directly to the bearing) via a forced oil circulation. It has proven to be advantageous if the opening is formed as a slot. This results in an improved supply of lubricant from the bearing chamber into the lubricant chamber and an enlarged lubricant circulation. Preferably, the slot extends in the direction of the bearing axis.

According to a preferred embodiment the bearing housing can comprise a bearing axis, wherein the cooling fin extends in the direction of the bearing axis and / or wherein the cooling fin extends in a circumferential direction with respect to the bearing axis. Thereby, the cooling fin can extend from the outer surface in a vertical direction to the bearing axis. This simplifies the production of the bearing housing. In addition, it is also possible, that the cooling fin extends spirally with respect to the bearing axis.

In practice the cooling fin can be designed in such a way that it has a substantially rectangular cross-sectional area in a section perpendicular to the bearing axis. Furthermore, the bearing housing can comprise a plurality of cooling fins. In addition, the cooling fins can be designed as fin stack, which comprises a plurality of cooling fins. Of course, the bearing housing can also comprise a plurality of fin stacks.

In a very advantageous embodiment, the cooling fin is detachably arranged on the bearing housing, in particular is detachably screwed to the bearing housing. The cooling fin is therefore removable and can be constructed via additive manufacturing or traditional methods. The removable cooling fins allows changing of the cooling fins to suit bearing heat load and environmental conditions. For example, the plurality of cooling fins can be increased (attached) by a settable number of cooling fins if there is a high bearing heat load and the plurality of cooling fins can be decreased (removed) by a settable number of cooling fins if there is a lower bearing heat load. This increases the flexibility of the system. In an embodiment according to the invention, the cooling fins can be arranged parallel to each other.

In practice the conduit can be designed in different ways. For example, the conduit can comprise a cooling chamber, which cooling chamber corresponds to a reservoir in the conduit that can increase cooling efficiency. Furthermore, the conduit can include a plurality of windings. The conduit can be arranged inside the cooling fins and / or on a surface of the cooling fins. If the conduit is arranged on the surface of the cooling fins, the conduit is preferably arranged meandering on the surface such that a majority of the surface is cover by the conduit. In particular the majority of the surface is 50 to 90 %, especially 60 to 80 % of the surface of the cooling fin.

The invention also relates to a flow machine with the bearing housing according to the invention. Here, the flow machine may be a pump, in particular a centrifugal pump. Preferably, the flow machine comprises the bearing arranged in the bearing chamber and a shaft rotatably mounted in the bearing. In a preferred embodiment, a conveying wheel is arranged in the lubricant chamber and is connected to the shaft in a rotationally fixed manner for guiding the lubricant through the conduit.

In practice the flow machine can comprise a spiral housing arranged in the bearing housing, which spiral housing is arranged around the conveying wheel for discharging a flow of the lubricant to the cooling fin which flow is generatable by the conveying wheel.

Further advantages, features and details of the invention result from the following description of embodiments and with reference to the drawings, in which identical or functionally identical elements are referred to with the same reference signs.

There are shown:
- Fig. 1: a sectional view of an embodiment of a flow machine according to the invention,
- Fig. 2: a sectional view of a bearing housing according to the invention,
- Fig. 3: a perspective view of an embodiment of fin stack according to the invention,
- Fig. 4: a sectional view of a second embodiment of a bearing housing according to the invention;
- Fig. 5: a sectional view of a fin stack with a cooling chamber.

In the following description, reference is made by way of example to an important application, namely that the flow machine is designed as a centrifugal pump.

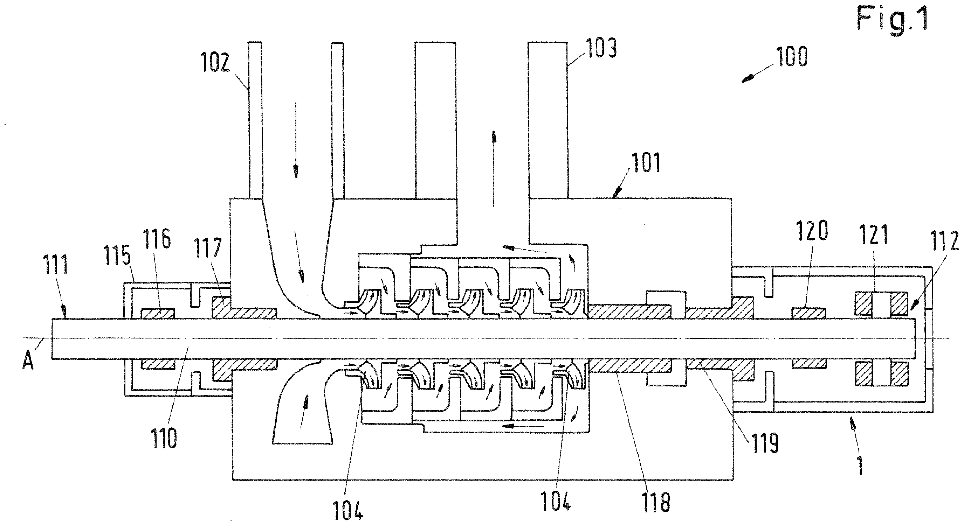

Fig. 1 shows a sectional view of an embodiment of a flow machine according to the invention, which is referred to in its unit with the reference sign 100. The embodiment of the flow machine 100 is a centrifugal pump 100 for conveying a fluid, for example water or crude oil or a multiphase liquid. It is clear, that the invention is neither limited to the centrifugal pump 100 shown in Fig. 1, nor to centrifugal pumps as such, but it refers to flow machines 100 in general. For example, the flow machine 100 may also be another type of pump, a compressor, a fan, an expander or a turbine.

The centrifugal pump 100 comprises a housing 101, which may consist of a plurality of housing parts, which are connected to each other to form the housing 101. The housing 101 of the centrifugal pump 100 comprises an inlet 102, through which the fluid to be conveyed enters the pump 100 and an outlet 103 for discharging the fluid. At least one impeller 104 is provided inside the housing 101 to convey the fluid. The centrifugal pump illustrated in Fig. 1 is designed as a multi-stage pump with several impellers 104, here five impellers 104. All impellers 104 are arranged in a row on a shaft 110 in a torque-proof manner. During operation of the pump, the impellers 104 are rotated by means of the shaft 110 about an axial direction A, which is defined by the longitudinal axis of the shaft 110. The flow of the fluid is indicated in Fig. 1 by the arrows without a reference sign.

The shaft 110 is driven by means of a drive unit, not shown here, for example, an electric motor or any other motor, to which the shaft 110 is coupled. The end of the shaft 110 coupled to the drive unit is referred to as the drive end 111 of the shaft, while the other end of the shaft 110 is referred to as the non-drive end 112. According to the illustration in Fig. 1, the drive end 110 connected to the drive unit (not shown) is on the left side.

The pump 100 comprises the following components starting from the drive end 111 of the shaft 110 and to the direction of the non-drive end 112: a drive end bearing housing 115 receiving a radial (or bearing journal) bearing 116; a mechanical sealing 117 for sealing the pump 100 against leakage of the fluid along the shaft 110; the plurality of the impellers 104; a relief piston 118 for compensating the axial thrust generated by the impellers 104; another mechanical sealing 119 for sealing the non-drive side of the shaft 110 against leakage of the fluid to be conveyed; and a non-drive end bearing housing 1 receiving another radial (or journal-shaped) bearing 120, and a thrust (or axial) bearing 121 for supporting the non-drive end 112 of the shaft 110 with respect to the radial direction and the axial direction A.

Thus, the centrifugal pump 100 is provided with bearings 116, 120, 121 on both sides of the plurality of impellers 104, in this example at the drive end 111 of the shaft 110 and at the non-drive end 112 of the shaft 110.

The bearing housing 115 arranged at the drive end 111 of the shaft 110 is designed according to the invention. Of course, the bearing housing according to the invention may also be provided at the non-drive end 112 or also at both ends of the centrifugal pump 100, i.e. at the drive end 111 and at the non-drive end 112.

The centrifugal pump 100 according to Fig. 1 has a thrust (or axial) bearing 121 as mentioned above. The bearing housing according to the invention is also particularly suitable for pumps without a thrust (or axial) bearing. These pumps have a two-part relief device instead of the relief piston 118 (Fig.1) for axial thrust compensation comprising a co-rotating relief disc and a fixed relief counter-disc, which form a gap extending in the radial direction, through which gap a part of the fluid being under pressure in the pump is discharged to the outside. In doing so, the shaft of the pump is kept in a state of equilibrium in the axial direction between the force generated by the axial thrust and the counterforce generated by the relief device. In contrast to the relief piston 118, the relief device is "self-regulating" and compensates the entire axial thrust, so that no separate axial bearing is required at the pump.

The bearing housing 115 will now be explained in more detail with reference to an embodiment of the bearing housing 115 for receiving the drive end 111 of the shaft 110.

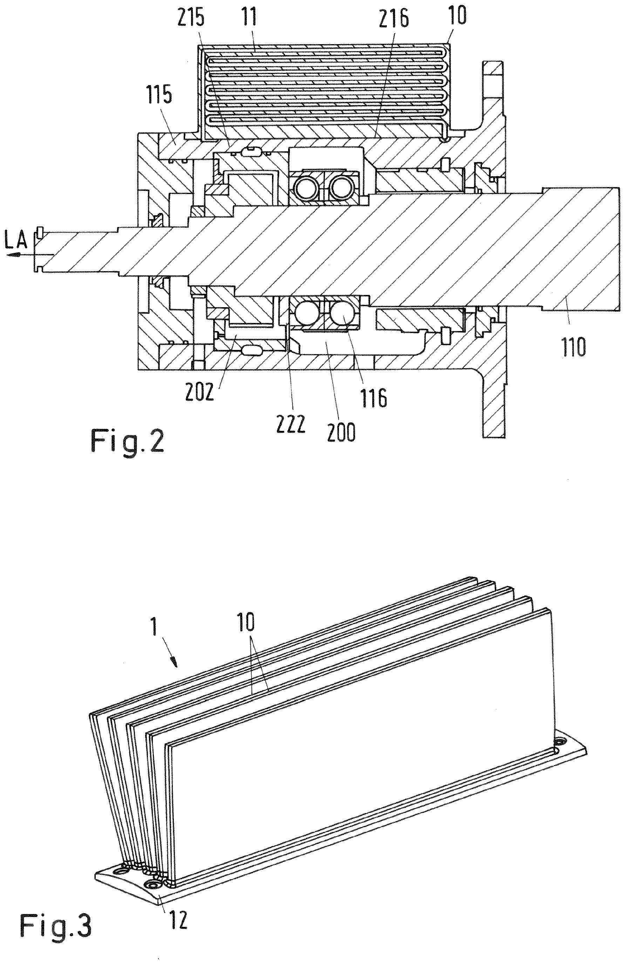

Fig. 2 shows a sectional view of a first embodiment of the bearing housing 115 according to the invention for receiving the drive end 111 of the shaft 110 of the flow machine 100. The bearing housing 115 comprises a bearing axis LA and a bearing chamber 200 for receiving a bearing 116 and a lubricant chamber 202 arranged at the bearing chamber 200 for receiving a lubricant. The bearing chamber 200 is in fluid communication with the lubricant chamber 202 via an opening 222 such that the lubricant can flow between the bearing chamber 200 and the lubricant chamber 202. Furthermore, the bearing housing 115 comprises a wall portion 215 with a cooling fin 10 for dissipating a heat of the lubricant to an environment. For effectively dissipating the heat of the lubricant to the environment the cooling fin 10 comprises a conduit 11 through which the lubricant can be conducted from the lubricant chamber 202 into the bearing chamber 200. The lubricant chamber 202 and the bearing chamber 200 are in fluid communication through the conduit 11.

The cooling fin 10 is arranged on an outer surface 216 of the wall portion 215, which outer surface 216 is directed towards the environment. In order to achieve better cooling, the outer surface 216 can be pressurized with a fluid such as water or air, for example via a fan.

The cooling fin 10 extends in the direction of the bearing axis LA and from the outer surface 216 in a perpendicular direction to the bearing axis LA. Alternatively, the cooling fin could extend in a circumferential direction with respect to the bearing axis LA.

The cooling fin 10 is detachably arranged on the bearing housing 115. The cooling fin 10 can in particular be screwed to the bearing housing 115.

In order to increase the heat dissipation, the conduit 11 is arranged meandering in the cooling fin such that a majority of a volume of the cooling fin 10 is filled through the conduit 11. The more windings the conduit 11 comprises and the more volume the conduit 11 takes up in the cooling fin 10, the more effectively the heat can be released into the environment. Therefore, 50 to 90 %, in particular 60 to 80 % of the volume of the cooling fin 10 are filled with the conduit 11.

Fig. 3 shows a perspective view of an embodiment of a fin stack 1 according to the invention.

The fin stack 1 comprises a plurality of cooling fins which are arranged on a plate 12, which plate 12 can be attached to the outer surface 216 of the bearing housing 115. Therefore, the fin stack can be detachably arranged on the bearing housing 115.

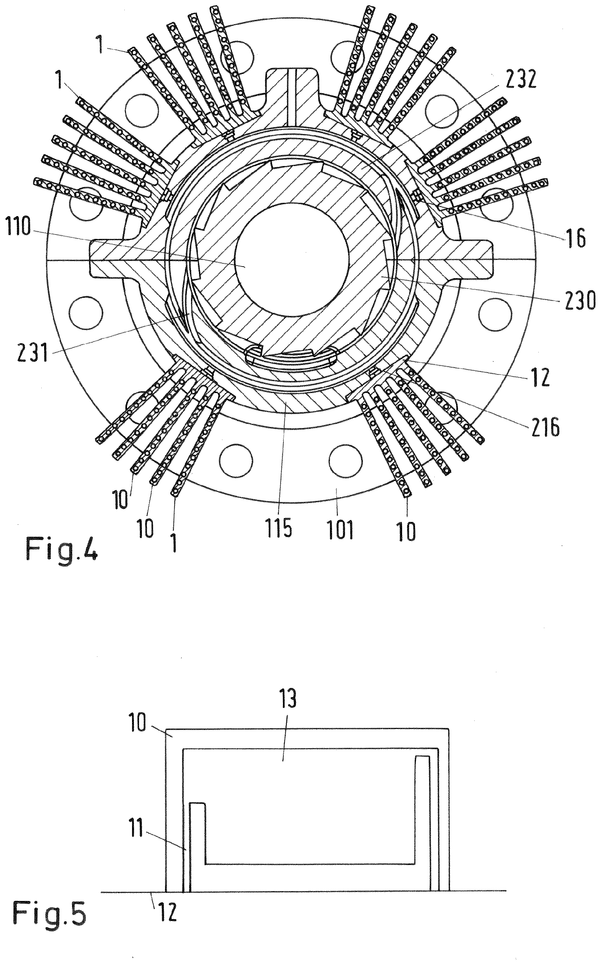

Fig. 4 shows a sectional view of a second embodiment of the bearing housing 115 according to the invention.

The bearing housing 115 comprises a plurality of fin stacks 1 with a plurality of cooling fins 10. The fin stacks are detachably arranged on the bearing housing 115. The fin stacks 10 are therefore removable and can be constructed via additive manufacturing. The removable fin stacks 1 allow a changing of the cooling fins to suit a bearing heat load and environmental conditions. For example, the plurality of cooling fins can be increased (attached) by attaching fin stacks with a higher number of cooling fins, thereby providing a bigger surface for heat exchange. This increases the flexibility of the system.

A conveying wheel 230 is arranged in the lubricant chamber 202 and is connected to the shaft 110 in a rotationally fixed manner. If the shaft 10 is rotating in the operating state of the pump the conveying wheel 230 is rotating as well. A spiral housing 232 arranged around the conveying wheel 230 for discharging a flow of the lubricant to the cooling fin 10 which flow is generatable by the conveying wheel 230.

Spiral housing 232 (also known as volute casing) is designed to guide the flow out of the conveying wheel 230 in order to convert the lubricants flow's kinetic energy into static pressure; it serves to collect the fluid discharged from the conveying wheel 230 and route it to a discharge nozzle 231 into the entry 16 of the conduits 10. The conveying wheel 230 and the spiral housing 232 thereby create forced lubricant circulation, such that the lubricant can be guide from the lubricant chamber through the conduit 11 in the cooling fins 10 to the bearing housing (and through the opening back to the lubricant chamber).

Fig. 5 shows a sectional view of an embodiment of the cooling fins 10. The conduit 11 of the cooling fin 10 is arranged in the inside of the cooling fin. The conduit 11 thereby comprises a cooling chamber 13, which cooling chamber 13 is a reservoir in the conduit 11 that increases the cooling efficiency. The cooling chamber 13 can have any suitable shape and can be designed in different ways depending on the application.

## Claims

1. A bearing housing for a flow machine (100), wherein the bearing housing (115) comprises a bearing chamber (200) for receiving a bearing (116) and a lubricant chamber (202) arranged at the bearing chamber (200) for receiving a lubricant, and the bearing chamber (200) is in fluid communication with the lubricant chamber (202) via an opening (222) such that the lubricant can flow between the bearing chamber (200) and the lubricant chamber (202), the bearing housing (200) comprising a wall portion (215) with a cooling fin (10) for dissipating a heat of the lubricant to an environment, **characterized in that** the cooling fin (10) comprises a conduit (11) for the lubricant through which conduit (11) the lubricant chamber (202) and the bearing chamber (200) are in fluid communication such that the lubricant can be conducted from the lubricant chamber (202) into the bearing chamber (200) through the conduit (11) to dissipate the heat to the environment.

2. A bearing housing according to claim 1, wherein the cooling fin (10) is arranged on an outer surface (216) of the wall portion (215), which outer surface (216) is directed towards the environment.

3. A bearing housing according to claim 1 or 2, wherein the conduit (11) is arranged meandering in the cooling fin (10) such that a majority of a volume of the cooling fin (10) is filled through the conduit (11).

4. A bearing housing according to one of the preceding claims comprising a bearing axis (LA), wherein the cooling fin (10) extends in the direction of the bearing axis (LA) and / or wherein the cooling fin (10) extends in a circumferential direction with respect to the bearing axis (LA).

5. A bearing housing according to claim 4, wherein the cooling fin (10) extends from the outer surface (216) in a vertical direction to the bearing axis (LA).

6. A bearing housing according to one of the preceding claims, wherein the cooling fin (10) is designed in such a way that it has a substantially rectangular cross-sectional area in a section perpendicular to the bearing axis (LA).

7. A bearing housing according to one of the preceding claims, wherein the cooling fin (10) is detachably arranged on the bearing housing (115), in particular is detachably screwed to the bearing housing (115).

8. A bearing housing according to one of the preceding claims, wherein the conduit (11) comprises a cooling chamber (13).

9. A bearing housing according to one of the preceding claims comprising a plurality of cooling fins (10).

10. A bearing housing according to claim 9, wherein the cooling fins (10) are arranged parallel to each other.

11. A flow machine with a bearing housing (115) according to anyone of the claims 1 to 10.

12. A flow machine according to claim 11, wherein the flow machine (100) is a pump (100), in particular a centrifugal pump (100).

13. A flow machine according to claim 11 or 12 comprising the bearing (116) arranged in the bearing chamber (200) and a shaft (110) rotatably mounted in the bearing (116).

14. A flow machine according to claim 13, wherein a conveying wheel (230) is arranged in the lubricant chamber (202) and is connected to the shaft (110) in a rotationally fixed manner for guiding the lubricant through the conduit (11).

15. A flow machine according to claim 14 comprising a spiral housing (231) arranged in the bearing housing (115), which spiral housing (231) is arranged around the conveying wheel (230) for discharging a flow of the lubricant to the cooling fin (10) which flow is generatable by the conveying wheel (230).

## Patentansprüche

1. Lagergehäuse für eine Strömungsmaschine (100), wobei das Lagergehäuse (115) eine Lagerkammer (200) zur Aufnahme eines Lagers (116) umfasst und eine an der Lagerkammer (200) angeordnete Schmiermittelkammer (202) zur Aufnahme eines Schmiermittels, und die Lagerkammer (200) über eine Öffnung (222) in Fluidverbindung mit der Schmiermittelkammer (202) ist, so dass das Schmiermittel zwischen der Lagerkammer (200) und der Schmiermittelkammer (202) fliessen kann, wobei das Lagergehäuse (200) einen Wandabschnitt (215) mit einer Kühlrippe (10) zur Ableitung einer Wärme des Schmiermittels an die Umgebung umfasst, **dadurch gekennzeichnet, dass** die Kühlrippe (10) eine Leitung (11) für das Schmiermittel umfasst, durch welche Leitung (11) die Schmiermittelkammer (202) und die Lagerkammer (200) in Fluidverbindung sind, so dass das Schmiermittel von der Schmiermittelkammer (202) in die Lagerkammer (200) durch die Leitung (11) geleitet werden kann, um die Wärme an die Umgebung abzuleiten.

2. Lagergehäuse nach Anspruch 1, wobei die Kühlrippe (10) an einer Aussenfläche (216) des Wandabschnitts (215) angeordnet ist, welche Aussenfläche (216) der Umgebung zugewandt ist.

3. Lagergehäuse nach Anspruch 1 oder 2, wobei die Leitung (11) mäanderförmig in der Kühlrippe (10) angeordnet ist, so dass ein Grossteil eines Volumens der Kühlrippe (10) durch die Leitung (11) ausgefüllt wird.

4. Lagergehäuse nach einem der vorangehenden Ansprüche, umfassend eine Lagerachse (LA), wobei sich die Kühlrippe (10) in Richtung der Lagerachse (LA) erstreckt und / oder wobei sich die Kühlrippe (10) in einer Umfangsrichtung in Bezug auf die Lagerachse (LA) erstreckt.

5. Lagergehäuse nach Anspruch 4, wobei sich die Kühlrippe (10) von der Aussenfläche (216) in einer vertikaler Richtung zur Lagerachse (LA) erstreckt.

6. Lagergehäuse nach einem der vorangehenden Ansprüche, wobei die Kühlrippe (10) derart ausgebildet ist, dass sie in einem Schnitt senkrecht zur Lagerachse (LA) eine im Wesentlichen rechteckige Querschnittsfläche aufweist.

7. Lagergehäuse nach einem der vorangehenden Ansprüche, wobei die Kühlrippe (10) lösbar an dem Lagergehäuse (115) angeordnet ist, insbesondere lösbar mit dem Lagergehäuse (115) verschraubt ist.

8. Lagergehäuse nach einem der vorangehenden Ansprüche, wobei die Leitung (11) eine Kühlkammer (13) umfasst.

9. Lagergehäuse nach einem der vorangehenden Ansprüche, umfassend eine Vielzahl von Kühlrippen (10).

10. Lagergehäuse nach Anspruch 9, wobei die Kühlrippen (10) parallel zueinander angeordnet sind.

11. Strömungsmaschine mit einem Lagergehäuse (115) nach einem der Ansprüche 1 bis 10.

12. Strömungsmaschine nach Anspruch 11, wobei die Strömungsmaschine (100) eine Pumpe (100) ist, insbesondere eine Zentrifugalpumpe (100).

13. Strömungsmaschine nach Anspruch 11 oder 12, umfassend das in der Lagerkammer (200) angeordnete Lager (116) und eine in dem Lager (116) drehbar montierte Welle (110).

14. Strömungsmaschine nach Anspruch 13, wobei ein Förderrad (230) in der Schmierstoffkammer (202) angeordnet ist und drehfest mit der Welle (110) verbunden ist, um den Schmierstoff durch die Leitung (11) zu führen.

15. Strömungsmaschine nach Anspruch 14, umfassend ein im Lagergehäuse (115) angeordnetes Spiralgehäuse (231), welches Spiralgehäuse (231) um das Förderrad (230) herum angeordnet ist, um einen Strom des Schmiermittels an die Kühlrippe (10) abzugeben, welcher Strom durch das Förderrad (230) erzeugt werden kann.

## Revendications

1. Logement de palier pour une machine d'écoulement (100), dans lequel le logement de palier (115) comprend une chambre de palier (200) pour recevoir un palier (116) et une chambre de lubrifiant (202) agencée au niveau de la chambre de palier (200) pour recevoir un lubrifiant, et la chambre de palier (200) est en communication fluidique avec la chambre de lubrifiant (202) via une ouverture (222) de telle sorte que le lubrifiant peut s'écouler entre la chambre de palier (200) et la chambre de lubrifiant (202), le logement de palier (200) comprenant une partie de paroi (215) avec une ailette de refroidissement (10) pour dissiper une chaleur du lubrifiant vers un environnement, **caractérisé en ce que** l'ailette de refroidissement (10) comprend un conduit (11) pour le lubrifiant, conduit (11) à travers lequel la chambre de lubrifiant (202) et la chambre de palier (200) sont en communication fluidique de telle sorte que le lubrifiant peut être conduit de la chambre de lubrifiant (202) vers la chambre de palier (200) à travers le conduit (11) pour dissiper la chaleur vers l'environnement.

2. Logement de palier selon la revendication 1, dans lequel l'ailette de refroidissement (10) est agencée sur une surface extérieure (216) de la partie de paroi (215), laquelle surface extérieure (216) est dirigée vers l'environnement.

3. Logement de palier selon la revendication 1 ou 2, dans lequel le conduit (11) est agencé en méandre dans l'ailette de refroidissement (10) de sorte qu'une majorité d'un volume de l'ailette de refroidissement (10) est remplie par le conduit (11).

4. Logement de palier selon l'une quelconque des revendications précédentes, comprenant un axe de palier (LA), dans lequel l'ailette de refroidissement (10) s'étend dans la direction de l'axe de palier (LA) et/ou dans lequel l'ailette de refroidissement (10) s'étend dans une direction circonférentielle par rapport à l'axe de palier (LA).

5. Logement de palier selon la revendication 4, dans lequel l'ailette de refroidissement (10) s'étend depuis la surface extérieure (216) dans une direction verticale jusqu'à l'axe de palier (LA).

6. Logement de palier selon l'une quelconque des revendications précédentes, dans lequel l'ailette de refroidissement (10) est conçue de telle sorte qu'elle présente une aire de section transversale sensiblement rectangulaire dans une section perpendiculaire à l'axe de palier (LA).

7. Logement de palier selon l'une quelconque des revendications précédentes, dans lequel l'ailette de refroidissement (10) est agencée de manière amovible sur le logement de palier (115), en particulier est vissée de manière amovible au logement de palier (115).

8. Logement de palier selon l'une quelconque des revendications précédentes, dans lequel le conduit (11) comprend une chambre de refroidissement (13).

9. Logement de palier selon l'une quelconque des revendications précédentes, comprenant une pluralité d'ailettes de refroidissement (10).

10. Logement de palier selon la revendication 9, dans lequel les ailettes de refroidissement (10) sont agencées parallèlement les unes aux autres.

11. Machine d'écoulement avec un logement de palier (115) selon l'une quelconque des revendications 1 à 10.

12. Machine d'écoulement selon la revendication 11, dans laquelle la machine d'écoulement (100) est une pompe (100), en particulier une pompe centrifuge (100).

13. Machine d'écoulement selon la revendication 11 ou 12, comprenant le palier (116) agencé dans la chambre de palier (200) et un arbre (110) monté de manière rotative dans le palier (116).

14. Machine d'écoulement selon la revendication 13, dans laquelle une roue de transport (230) est agencée dans la chambre de lubrifiant (202) et est reliée à l'arbre (110) de manière fixe en rotation pour guider le lubrifiant à travers le conduit (11).

15. Machine d'écoulement selon la revendication 14, comprenant un logement en spirale (231) agencé dans le logement de palier (115), lequel logement en spirale (231) est agencé autour de la roue de transport (230) pour décharger un écoulement du lubrifiant vers l'ailette de refroidissement (10), lequel écoulement peut être généré par la roue de transport (230).
